# EUROPEAN PATENT APPLICATION

(11) **EP 1 349 136 A1**
(43) Date of publication of application: **01.10.2003**
(21) Application number: 03075476.6
(22) Date of filing: 18.02.2003
(51) Int. Cl.: G09F 21/04, G09F 9/33, B60Q 1/50

(54) **Signalling device**

(30) Priority: 26.03.2002 GB 0207039
(71) Applicant: Fairley, Andrew Martin, Port Solent, Hampshire PO6 4TW (GB)
(72) Inventor: Fairley, Andrew Martin, Port Solent, Hampshire PO6 4TW (GB)
(74) Representative: Brooks, Nigel Samuel

(57) **Abstract**

A device for signalling between vehicles is provided, having a transmitter for mounting in a cab of the vehicle and for transmitting a wireless, message-initiating signal. A remote unit is also provided for receiving the wireless, message-initiating signal and a display for displaying a message in response to the signal. The device is adapted to be moved with a driver from vehicle to vehicle. The message will generally be THANK YOU, in English or any other language appropriate to the country where the device is in use. The device may be powered from internal batteries or the electrical supply of the vehicle.

## Description

The present invention relates to a signalling device, particularly, though not exclusively, for use in sending a message from one vehicle to a following one.

It is known to signal as with a direction indicator. There have also been proposals to install message displays in the rear wind screen of cars. Police cars use such devices.

Lorries, when overtaking have developed a habit of indicating once with one indicator and once with the other to say thank you to a following lorry who has just indicated with a head-light flash that the front lorry is clear to pull in after overtaking. In my experience, this can be confusing to other drivers, how may mistake this use of indicators to mean that the indicating lorry is about to pull out and overtake.

The object of my invention is to provide a signalling device with which a driver can thank a following driver, bearing in mind that an articulated lorry is configured as a tractor and trailer, the driver often delivering one trailer and collecting another.

Accordingly in my invention I provide a vehicle signalling device comprising:
a transmitting unit adapted for mounting in a cab of the vehicle and having a transmitter to transmit a wireless, message-initiating signal and
a remote signalling unit adapted for mounting at the rear of the vehicle and for displaying a visible message in response to a message-initiating signal and having a receiver to receive the message-initiating signal.

Whilst it is envisaged that the transmitting unit and the signalling unit could be of the type requiring aerials, or indeed an infra-red emitter and receptor, which could be arranged close to each other at the front of the trailer and the rear of the tractor, with attendant wiring to the units as such, the transmitter and the receiver are preferably of the type requiring no external aerial, such as used in vehicle locking systems.

The transmitting unit could be adapted to permanently attached in a cab of the vehicle. However, it is preferably removable, as with a sucker, hook and loop fastener or a self-adhesive pad. Conveniently it is provided with a single button for initiating the signal. Additionally, it can be provided with an indicator such as an LED to indicate that it is active.

The signalling unit likewise could be permanently installed at the rear of the vehicle, or its trailer. However, it is preferably demountable, to allow the driver to remove it to another vehicle or trailer. Demounting can be by sucker, magnet, lashing or screw fastening. Preferably, the unit has a viewing window with a series of LEDs arranged on a board within the window to spell the message such as:
THANK YOU or MERCI BIEN or DANKE SCHÖN.
Both units can be adapted to be powered from the vehicle's electrical supply. However, they are preferably powered from internal batteries, facilitating transferability.

To help understanding of my invention, a specific embodiment thereof will now be described by way of example and with reference to the accompanying drawings, in which:
Figure 1 is a perspective view of a transmitting unit of a signalling device of my invention;
Figure 2 is a view of the transmitting unit installed in a lorry cab;
Figure 3 is a perspective view of a signalling unit of the signalling device;
Figure 4 is a similar view of the signalling unit installed at the rear of a lorry;

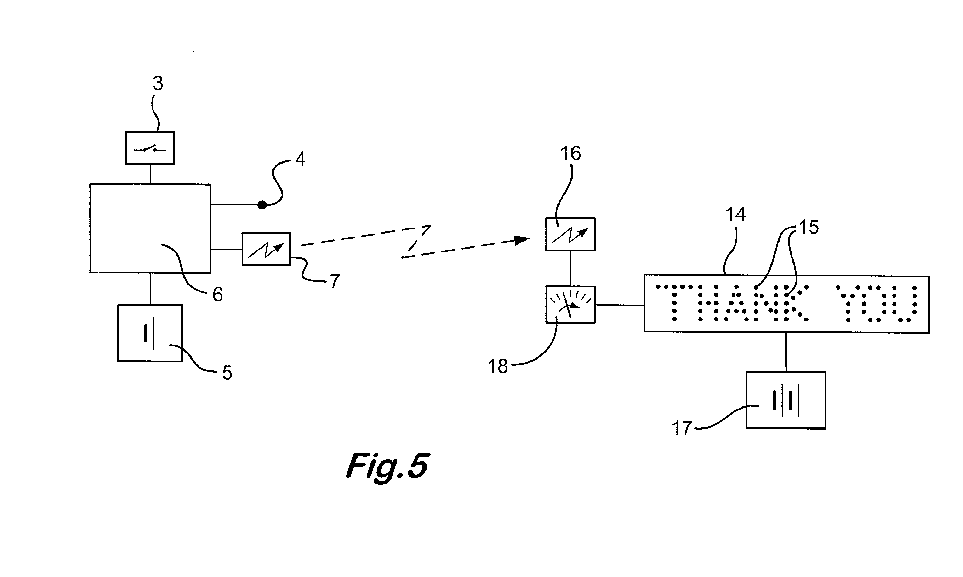

Figure 5 is a block diagram of the circuitry of the signalling device.

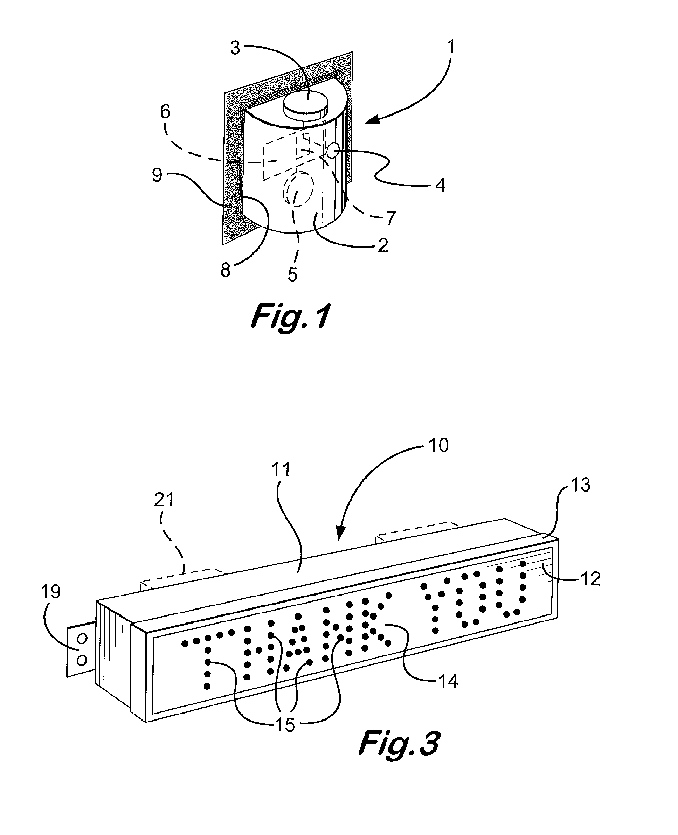

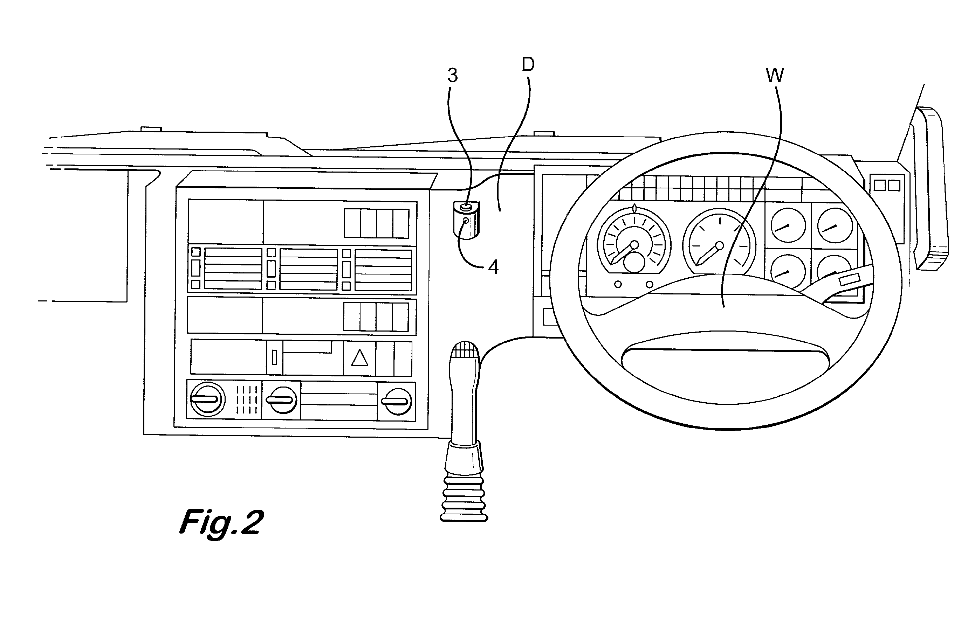

Referring first to Figures 1 and 2, the transmitting unit 1 of the signalling device comprises a small injection moulded case 2 having an operating button 3 and an indicating LED 4. Internally it accommodates a battery 5 and a PCB 6 embodying a transmitting circuit 7. The circuit will not be described in detail. It can be similar to that used for remote locking of vehicles. As shown, the case is provided with one side 8 of a hook and loop fastening. The other side 9 is affixed to the dashboard D or indeed the steering wheel W of the vehicle.

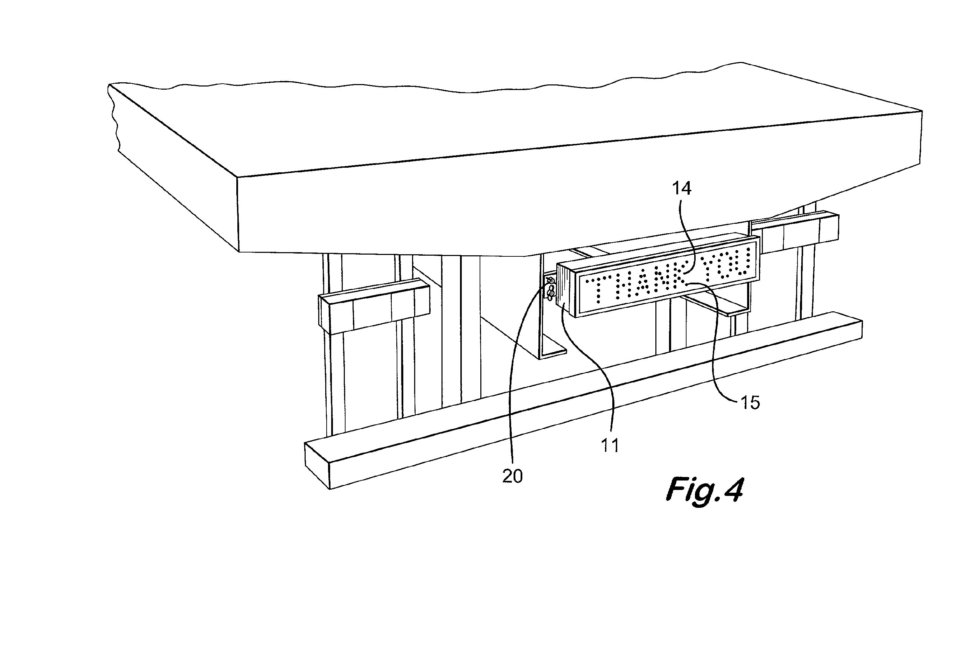

The signalling unit 10 shown in Figures 3 & 4 has a casing 11 of pressed steel, with a transparent plastics material window 12 held on by a surround 13. Mounted within the window is a PCB 14 having LEDS 15 set out in the manner of the letters of THANK YOU. A receiving circuit 16 is mounted on the PCB. A battery 17 provides power to the LEDs in event of a signal from the transmitting unit. A timer circuit 18 maintains the power for 5 seconds.

The casing is provided with attachment flanges 19 for fastening the unit to frame of the lorry at its rear, as by bolts and wing nuts 20.

In use, the lorry having the signalling device overtakes another who flashes to indicate room to pull in. The driver presses the operating button 3. The LED on the transmitting unit stays illuminated for 5 seconds. The transmitting circuit 7 initiates illumination of the THANK YOU LEDs for 5 seconds via the receiving circuit 16 and the timer 18. After delivery, if the lorry driver is required to deliver a different trailer elsewhere, it is a simple matter to remove the signalling unit, which is self contained and install it at the rear of the next trailer.

The invention is not intended to be restricted to the details of the above-described embodiment. For instance, the signalling unit can be attached to the lorry by magnetic clamps 21 for instance.

## Claims

1. A vehicle signalling device comprising:
• a transmitting unit adapted for mounting in a cab of the vehicle and having a transmitter to transmit a wireless, message-initiating signal and
• a remote signalling unit adapted for mounting at the rear of the vehicle and for displaying a visible message in response to a message-initiating signal and having a receiver to receive the message-initiating signal.

2. A vehicle signalling device as claimed in claim 1, wherein the transmitter and the receiver are of the type requiring no external aerial, such as used in vehicle locking systems.

3. A vehicle signalling device as claimed in claim 1, wherein the transmitting unit and the signalling unit are of the type requiring aerials.

4. A vehicle signalling device as claimed in claim 1, wherein the transmitting unit is an infra-red emitter and the signalling unit is infra-red receptor.

5. A vehicle signalling device as claimed in any preceding claim, wherein the transmitting device is moveable.

6. A vehicle signalling device as claimed in claim 5, wherein the transmitting device is attachable to the vehicle by means of a sucker, hook and loop fastening, or a self-adhesive pad.

7. A vehicle signalling device as claimed in any one of claims 1 to 4, wherein the transmitting unit is adapted to permanently attached in a cab of the vehicle.

8. A vehicle signalling device as claimed in any preceding claim, wherein the transmitting unit is provided with a single button for initiating the signal.

9. A vehicle signalling device as claimed in any preceding claim, wherein the transmitting unit is provided with an indicator to indicate that it is active.

10. A vehicle signalling device as claimed in claim 9, wherein the indicator is an LED.

11. A vehicle signalling device as claimed in any preceding claim, wherein the remote signalling unit is permanently installed at the rear of the vehicle or its trailer.

12. A vehicle signalling device as claimed in any one of claim 1 to 9, wherein the remote signalling unit is demountable, to allow a driver to remove it to another vehicle or trailer.

13. A vehicle signalling device as claimed in claim 11, wherein the fixing for demounting of the remote signalling unit is a sucker, magnet, lashing or screw fastening.

14. A vehicle signalling device as claimed in any preceding claim, wherein remote signalling unit has a viewing window with a series of LEDs arranged on a board within the window to spell the message

15. A vehicle signalling device as claimed in any preceding claim, wherein the message is:
THANK YOU or MERCI BIEN or DANKE SCHÖN.

16. A vehicle signalling device as claimed in any preceding claim, wherein both the transmitter unit and the remote signalling unit are powered from internal batteries.

17. A vehicle signalling device as claimed in any one of claim 1 to 15, wherein both the transmitter unit and the remote signalling unit are adapted to be powered from the vehicle's electrical supply.

18. A vehicle signalling device substantially as hereinbefore described with reference to Figures 1 to 5 of the accompanying drawings.
